Europäisches Patentamt

European Patent Office

Office européen des brevets

(11) Publication number: **0 369 161**
**A1**

## (12) EUROPEAN PATENT APPLICATION

(21) Application number: **89118795.7**

(51) Int. Cl.⁵: **B62M 23/02**

(22) Date of filing: **10.10.89**

The title of the invention has been amended (Guidelines for Examination in the EPO, A-III, 7.3).

(30) Priority: **21.10.88 IT 2239688**

(43) Date of publication of application:
**23.05.90 Bulletin 90/21**

(84) Designated Contracting States:
**AT BE CH DE ES FR GB GR IT LI LU NL SE**

(71) Applicant: **Silvestri, Mario**
**Via Amedeo d'Aosta, 9**
**I-20129 Milano(IT)**

Applicant: **Zarotti, Claudio**
**Via Marco Polo, 7**
**I-20124 Milano(IT)**

Applicant: **Panzani, Costantino**
**Via Marsala, 21**
**I-20052 Monza - Milano(IT)**

(72) Inventor: **Silvestri, Mario**
**Via Amedeo d'Aosta, 9**
**I-20129 Milano(IT)**
Inventor: **Zarotti, Claudio**
**Via Marco Polo, 7**
**I-20124 Milano(IT)**
Inventor: **Panzani, Costantino**
**Via Marsala, 21**
**I-20052 Monza - Milano(IT)**

(74) Representative: **De Nova, Roberto et al**
**c/o Jacobacci-Casetta & Perani S.n.c. Via**
**Visconti di Modrone 7**
**I-20122 Milano(IT)**

(54) **Bicycle with an auxiliary engine.**

(57) A bicycle (1) which, for a given muscular effort input, affords improved performance, comprises a frame (2), two road wheels (4,5), a pedal-operated drive (6) acting on one wheel (4), a transducer (9) associated with said drive (6) to continuously monitor the muscular effort and issue a corresponding signal, and a motor unit (24) acting on one wheel (5) and being controlled by said signal.

FIG.1

This invention relates to a bicycle of a type which comprises a frame, two road wheels, and a pedal-operated drive acting on one of the road wheels.

As is known, the bicycle is presently valued, and its use so widespread, because it affords healthy exercise and an ability to economically travel distances of a few kilometers.

Where a longer distance, or one including uphill stretches, is to be covered, however, the use of a bicycle may become prohibitive, at least for normal people who are no professional cyclists.

As a low-cost means of conveyance over medium distances, motorbikes have been proposed which may come in such extremely light versions as mopeds.

However, the latter permit of no desirable physical exercise, as typically does instead the pushing bike.

The problem that underlies this invention is to provide a bicycle as specified above, which has such construction and performance characteristics as to overcome the cited limitations which beset the prior art.

This problem is solved by a bicycle as indicated being characterized in that it comprises a transducer associated with said drive which is effective to monitor on a continuous basis the muscular effort being developed and to issue a corresponding signal, and a motor drivingly connected to one wheel and controlled by said signal.

Further features and the advantages of a bicycle according to the invention will become apparent from the following detailed description of a preferred embodiment thereof, given by way of illustration and not of limitations with reference to the accompanying drawings, where:

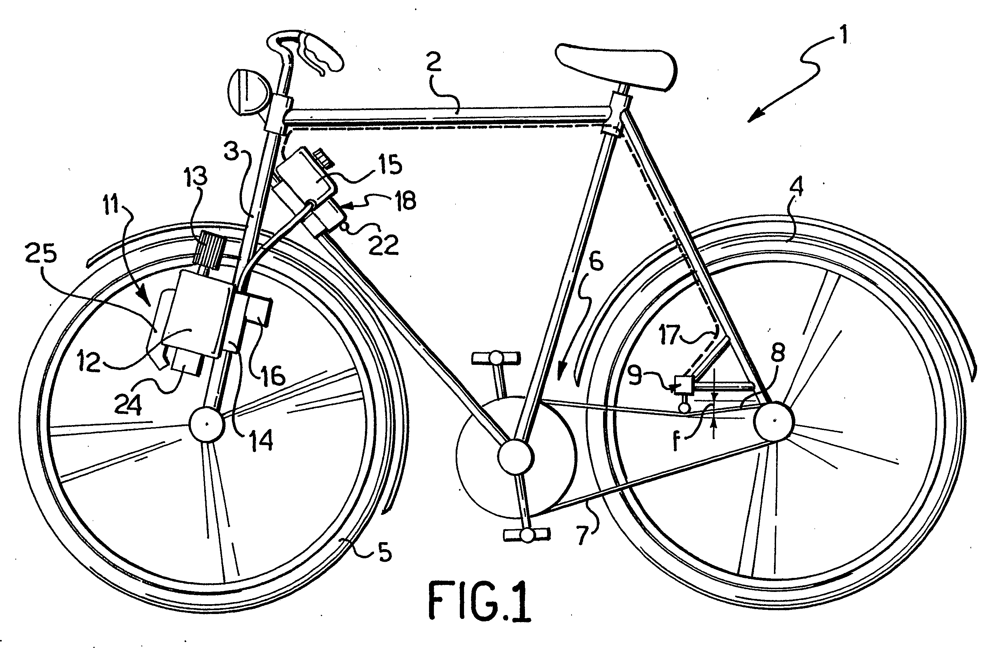

Figure 1 is an elevation view showing schematically a bicycle according to the invention; and

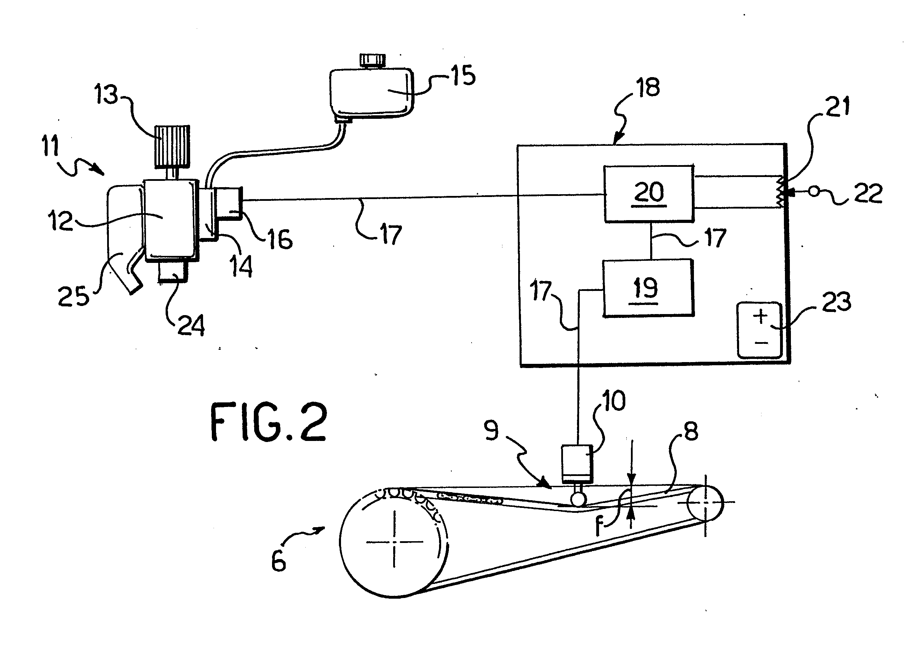

Figure 2 is a diagramatic illustration of a detail of the bicyle shown in Figure 1.

With reference to the accompanying drawing views, generally indicated at 1 is a bicycle according to the invention.

The bicycle 1 comprises a frame 2, wherewith a front fork 3, rear wheel 4, and front wheel 5 are associated.

Arranged to act on the rear wheel 4 is a pedal-operated drive 6 which includes an endless drive chain 7 having a working run 8.

The bicycle 1 of this invention comprises a transducer 9 associated with the pedal-operated drive 6 to continuously monitor the muscular effort being developed by the user and transferred to the rear wheel 4, and to issue a proportional signal to said effort.

In the example under consideration, the transducer 9 comprises a conventional load cell 10 mounted to the frame 2 at such a location as to impart a predetermined deflection f to the working run 8, and to be subjected in consequence to a component of the tension force being applied to the working run by the muscular effort developed by the user.

The bicycle 1 of this invention also comprises a motor unit 11 which is connected drivingly to the front wheel 5 and controlled by the signal from the transducer 9.

In the example being considered, the motor unit 11 comprises a conventional engine 12, e.g. of the kind used for airplane and car models, which is secured on the fork 3 and acts on the wheel 5 through a driving spool 13. The engine 12 is conventionally completed by a carburetor 14 which is in communication with a fuel tank 15, and by an assist 16 for controlling the fuel feed.

The assist 16 is connected to the transducer 9 by means of a line 17 which includes an electronic unit 18. This unit 18, additionally to powering the load cell 10 and assist 16, contains a sub-unit 19 conditioning the signal from the transducer 9 and an amplifier 20.

The sub-unit 19 will process the signal from the transducer 9 and provide a mean value thereof.

The amplifier 20 will amplify said signal according to a desired amplification ratio which is adjustable between a minimum and a maximum by means of a potentiometer 21 having a respective control knob 22.

The bike 1 is completed by a battery 23, installed within the electronic unit 18, and a generator 24 which is associated with the engine 12 to re-charge the battery 23.

Also associated with tyhe engine 12 is a muffler 24.

The operation of the bicycle according to the invention will be now described.

As the muscular effort developed by the user is being applied to the drive 6, the tension on the working run 8 of the drive chain 7 will be monitored by the transducer 9 on a continuous basis. The signal issuing therefrom, as suitably meaned and amplified, will control the motor unit 11 to transfer, via the driving spool 13, a torque to the front wheel 5 which is proportional to said signal. Thus, the front wheel 5 also becomes a driving wheel.

The torque transferred from the motor unit can be adjusted as desired by acting on the amplifier control knob.

Accordingly, the bicycle is propelled by the muscular effort developed by the user, on the one side, and by the motor unit on the other, to a proportion which can be varied as desired.

A major advantage of the bicycle according to the invention is that it affords healthy exercise for the user through the muscular effort required to drive the rear wheel, and at the same time the ability to cover distances hitherto outside the user's capability through the amplification of that effort and its transfer to the front wheel as well.

A further advantage of the inventive bicycle is that the amplification of the muscular effort can be adjusted as required for best balance of physical exercise and distance to travel.

Understandably, a bicycle as disclosed hereinabove may be variously modified and altered by a skilled person in the art for the purpose of meeting specific contingent demands, without departing from the invention scope as set forth in the appended claims.

**Claims**

1. A bicycle (1) of a type comprising a frame (2), two road wheels (4,5), and a pedal-operated drive (6) acting on one (4) of the road wheels, characterized in that it comprises a transducer (9) associated with said drive (6) which is effective to monitor on a continuous basis the muscular effort being developed and to issue a corresponding signal, and a motor (24) drivingly connected to one wheel (5) and controlled by said signal.

2. A bicycle (1) according to Claim 1, characterized in that it comprises an amplifier (20) for said signal which has an adjustable amplification ratio.

3. A bicycle (1) according to Claim 2, characterized in that said drive (6) comprises a drive chain (7) having a working run (8) subjected to a tension force from the user's muscular effort, and that the transducer (9) comprises a load cell (10) mounted to the frame (2) at such a location as to impart a predetermined deflection (f) to the working run (8) and being subjected to one component of said force.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 193 936 (T. NORTH) <br> * Complete document * <br> --- | 1-3 | B 62 M 23/02 |
| X | US-A-4 221 275 (W.B. PENNEBAKER) <br> * Complete document * <br> --- | 1-3 | |
| X | NL-A-7 508 538 (H.E. ROSEN) <br> * Claims 1-8; figures * <br> --- | 1-3 | |
| X | US-A-3 921 745 (R.P. McCULLOCH) <br> * Figures; column 2, line 28 – column 3, line 2; column 3, line 60 – column 4, line 45 * <br> --- | 1,2 | |
| X | FR-A-2 532 607 (HONDA GIKEN K.K.K.) <br> * Figures; claims 1-3 * <br> ----- | 1 | |
| | | | **TECHNICAL FIELDS SEARCHED (Int. Cl.5)** |
| | | | B 62 M |

The present search report has been drawn up for all claims

| Place of search | Date of completion of the search | Examiner |
|---|---|---|
| THE HAGUE | 23-01-1990 | FRANKS B.G. |

EPO FORM 1503 03.82 (P0401)